# EUROPEAN PATENT SPECIFICATION

(11) **EP 4 416 490 B1**
(45) Date of publication and mention of the grant of the patent: **07.05.2025**
(21) Application number: 22798361.6
(22) Date of filing: 14.10.2022
(51) Int. Cl.: G01N 21/64, G02B 21/36, G06V 20/69, G06V 10/50, G06V 10/60, G02B 21/00

(54) **METHOD, DEVICE, MICROSCOPE AND COMPUTER PROGRAM FOR ANALYZING MICROSCOPY DATA**
VERFAHREN, VORRICHTUNG, MIKROSKOP UND COMPUTERPROGRAMM ZUR ANALYSE VON MIKROSKOPIEDATEN
PROCÉDÉ, DISPOSITIF, MICROSCOPE ET PROGRAMME INFORMATIQUE POUR L'ANALYSE DE DONNÉES DE MICROSCOPIE

(30) Priority: 15.10.2021 EP 21203018
(43) Date of publication of application: 21.08.2024
(73) Proprietor: Abberior Instruments GmbH, 37077 Göttingen (DE)
(72) Inventor: REUSS, Matthias, 37083 Göttingen (DE)
(86) International application number: PCT/EP2022/078681
(87) International publication number: WO 2023/062204

(56) References cited:
- RANJIT S ET AL: "Multicomponent Analysis of Phasor Plot in a Single Pixel to Calculate Changes of Metabolic Trajectory in Biological Systems", vol. 123, no. 45, 14 November 2019 (2019-11-14), US, pages 9865 - 9873, XP055895751, ISSN: 1089-5639, Retrieved from the Internet <URL:https://pubs.acs.org/doi/pdf/10.1021/acs.jpca.9b07880> [retrieved on 20220228], DOI: 10.1021/acs.jpca.9b07880
- RANJIT S ET AL: "Fit-free analysis of fluorescence lifetime imaging data using the phasor approach", NATURE PROTOCOLS, NATURE PUBLISHING GROUP, GB, vol. 13, no. 9, 6 September 2018 (2018-09-06), pages 1979 - 2004, XP036591311, ISSN: 1754-2189, [retrieved on 20180906], DOI: 10.1038/S41596-018-0026-5
- MALACRIDA L ET AL: "LAURDAN fluorescence and phasor plots reveal the effects of a H2O2bolus in NIH-3T3 fibroblast membranes dynamics and hydration", FREE RADICAL BIOLOGY & MEDICINE, ELSEVIER INC, US, vol. 128, 6 June 2018 (2018-06-06), pages 144 - 156, XP085496962, ISSN: 0891-5849, DOI: 10.1016/J.FREERADBIOMED.2018.06.004

## Description

### Technical area of the invention

The invention relates to a method, a device, a microscope and a computer program for analyzing microscopy data, particularly light microscopy data. Microscopy data may be image data encoding an image of a sample comprising emitters, particularly fluorophores, that emit light in response to excitation light or localization data of single emitters in the sample. The microscopy data may be obtained by various microscopy techniques, particularly involving fluorescence microscopy.

### Prior art

Light microscopy (e.g., fluorescence microscopy) often involves the parallel analysis of several species of emitters, e.g., different fluorophores, which have a distinct fluorescence emission spectrum or fluorescence lifetime, or the same fluorophore bound to different target molecules resulting in an altered emission spectrum or lifetime. In addition, in STED microscopy, where the sample is illuminated by a spatial intensity distribution of STED light, the emitters display different fluorescence lifetimes depending on their location relative to the local minimum of the STED light intensity distribution.

The amount of light generated by each species of the emitters for each location in the sample can be assigned to a specific channel which can be displayed as an image representing the distribution of the respective emitter species in the sample. In case of scanning microscopy, each of these locations are represented by a pixel of the scanning image.

However, different emitter species often co-exist at the same location in the sample, which makes it difficult to determine the relative contribution of the species to the light detected for a certain location.

In case of different emission spectra, a combined spectrum results for each pixel, and determining the relative contribution of the detected light to each channel (spectral unmixing) is often complicated, especially since reference spectra of the pure components are sometimes not available or differ from the actual spectra under the conditions in the sample.

Likewise, in fluorescence lifetime imaging, mixed species with different lifetimes result in multiexponential decay curves. Obtaining the lifetimes of the pure components from these curves is often difficult and prone to errors and fitting artefacts.

In certain cases, lifetime components may be separated by time-gated detection, but this technique reduces the signal-to-noise ratio since a fraction of the detected photons are simply cut off from the data.

An approach for unmixing of lifetime components based on time gating (M.J. Roberti, L.O. Lopez, G. Ossato, I. Steinmetz, P. Haas, F. Hecht, L.A.J. Alvarez: "TauSense: a fluorescence lifetime-based tool set for everyday imaging", Application Note in Nature Methods, September 2020) involves fast, hardware-implemented binning of photon arrival time data to generate several subsequent time gates. From the photon counts in each time gate, a lifetime component distribution is obtained and fitted with a multi-exponential function. The user can select and allocate certain time gates to lifetime channels from the component distribution to separate the signals from different dyes ("TauSeparation") or visualize the lifetime distribution in an imaged cell ("TauScan").

However, this technique requires dedicated hardware. In addition, valuable time information is lost by the binning/time gating process, which may be problematic especially when the difference of the two species in lifetimes or spectra is relatively small.

Another powerful solution to signal unmixing in fluorescence microscopy while preserving the signal-to-noise ratio is phasor analysis, which has been described both for lifetime imaging (M. Digman et al., "The Phasor Approach to Fluorescence Lifetime Imaging Analysis", Biophysical J 94(2), L14-L16 (2008)) and spectral imaging (F. Fereidouni et al., "Spectral phasor analysis allows rapid and reliable unmixing of fluorescence microscopy spectral imaging", Optics Express 20(12), 12729-12741 (2012)).

In phasor analysis, the measured spectra (in case of spectral imaging) or fluorescence time traces (in case of lifetime imaging) for each pixel are Fourier transformed and the real and imaginary parts of the Fourier coefficients are displayed in a two-dimensional phasor plot, where each pixel is represented by a vector.

Signals from a single emitter species are localized around a single location on the phasor plot, and mixed signals from two species are scattered around a line connecting the locations of the pure species (channels). There is a linear dependence between the location of a pixel relative to this line and the contribution of the detected light to a channel representing a species of emitters. E.g., if 50 % of the light detected at a pixel belongs to channel A and 50 % to channel B, the pixel is located at the center of the line, mid-way between the points representing pure channel A and pure channel B. In case of three channels, the pixels are located within a triangle formed by the pure emitter species, and the relative contributions of the three channels to the light detected for a pixel may be determined, e.g., by calculating the normalized barycentric coefficients of the pixel relative to the three points.

An example of three-component phasor plot analysis is described in the article "Multicomponent Analysis of Phasor Plot in a Single Pixel to Calculate Changes of Metabolic Trajectory in Biological Systems" by S. Ranjit et al., J Phys Chem A 2019, 123, 9865-9873. According to this publication, the relative contribution of a lifetime species can be analyzed in the phasor plot graphically by drawing a line from one corner of a triangle representing the lifetime of a first component through the phasor pixel and projecting this line onto the connection between the corners representing the other two components. The relative contribution of the first component can be deduced from the distance of the phasor pixel from the first component relative to the distance between the component and the line intersection.

Phasor analysis has also been used to improve the resolution in STED microscopy by a method termed "STED-SPLIT" (Lanzano, L. et al. "Encoding and decoding spatio-temporal information for super-resolution microscopy". Nat. Commun. 6:6701 doi: 10.1038/ncomms7701 (2015)). According to this approach, time traces are acquired for each pixel during STED microscopy, Fourier transformed and displayed in a phasor plot. Based on the phasor plot, the data is then split into a first group of pixels from a central region of low STED intensity representing high-resolution information and a second group of pixels from a peripheral region of the diffraction limited PSF which are exposed to higher STED intensities and thus represent lower resolution information (so-called "SPLIT algorithm") In addition, uncorrelated background fluorescence may be removed using the STED-SPLIT method.

In a variant of this method termed "mSTED" (modulation-enhanced STED), STED images are acquired while modulating the power of the STED beam, and fluorescence intensity values are determined for each pixel and each STED power (M. Sarmento et al., "Exploiting the tunability of stimulated emission depletion microscopy for super-resolution imaging of nuclear structures", Nature Commun. 9(1), 3415-3426 (2018), WO 2019/077556 A1). Fourier coefficients are then calculated from the stack of images acquired at different STED powers. Due to the increasing resolution as a result of the increasing STED power, additional spatial resolution is encoded in this series of images, which can be used to apply the SPLIT algorithm and improve the resolution of the final processed STED image. An advantage of the mSTED method is that it does not require time-resolved detection of fluorescence.

Phasor analysis has been included in a number of commercial microscopy software packages for spectral imaging and fluorescence lifetime analysis. In the corresponding graphical user interfaces, the phasor plot is displayed and users are sometimes able to select and separately display partial data sets representing spectral or lifetime channels.

However, understanding the concept of the phasor plot and effectively working with phasor plots to analyze microscopy data requires background knowledge and experience. Therefore, many unexperienced users are reluctant to use these tools or do not exploit their full potential.

### Objective problem

Thus, the problem underlying the present invention is to provide a method for analyzing microscopy data involving determining the relative contribution of different species of emitters to detected emittance light in an intuitive and comprehensive manner.

### Solution

This objective is attained by the subject matter of the independent claims 1 (method), 13 (device), and 15 (computer program). Embodiments of the invention are specified in dependent claims 2 to 12 and claim 14 and described hereafter.

### Description of the invention

A first aspect of the invention relates to a method for analyzing microscopy data, as defined with appended independent claim 1, comprising *- inter alia* and as further defined with claim 1 - the steps of receiving, by a processor, microscopy data obtained from a sample comprising a plurality of emitters which emit emittance light in response to excitation light, wherein the microscopy data comprise emittance light intensities for a plurality of pixels, determining, by the processor, for each of the pixels a relative contribution to a plurality of channels representing emittance light emitted by different species of the emitters, displaying, by a display device, the microscopy data in at least one histogram comprising a first axis representing the relative contributions to at least one of the channels, displaying by the display device a manipulation tool, receiving, by an input device, a user input indicating a manipulation of the manipulation tool to select a subset of the microscopy data from the histogram or to adjust the relative contribution to the channels, and displaying, by the display device, at least one image based on the subset of the microscopy data that have been selected based on the histogram and/or the relative contributions to the channels that have been adjusted based on the histogram.

The histogram displays numbers of pixels assigned to a plurality of classes indicating respective ranges or bins of the relative contribution to the plurality of channels. In particular, pixels which have the same relative contribution to a channel are counted and depicted in the histogram as a number of occurrences in certain ranges of the relative contribution.

The relative contribution to the channels is adjusted by determining weights based on the relative contributions to the channels and scaling the intensities of the pixels by the weights.

By displaying a histogram of the microscopy data on a scale representing the relative contribution to the channels, an intuitive and comprehensive tool for data selection and allocation to channels is provided. The histogram representation of the microscopy data is easily understood also by inexperienced users, e.g., compared to a phasor plot representation.

In particular, the emitters in the sample are fluorophores, which are excited by excitation light to emit fluorescence light. For example, the emitters may be fluorescent dye molecules, which are, e.g., conjugated to antibodies or similar molecules which bind to target biomolecules in a cell, or fluorescent proteins, which may be covalently or non-covalently linked to the target molecules.

The pixels of the microscopy data may be obtained by scanning microscopy, e.g., by scanning a focused excitation light beam through the sample and de-scanning the fluorescence light, as known from confocal laser scanning microscopy. In other words, each pixel may relate to a scanning position of the excitation light and/or the detection light.

The expression 'relative contribution to a channel' as used herein describes the amount of the detected emission light signal of a respective pixel stemming from a certain emitter species constituting the channel. For instance, 20 % of the light of a given pixel may have been generated by fluorophore A (first channel) and 75% by fluorophore B (second channel), and 5% by background light. The relative contribution may be expressed in per cent but may also be displayed in various other analogous ways, e.g., real numbers between 0 and 1.

For pixels comprising measured light from two or more emitters, the relative contribution to a channel may be determined by an unmixing algorithm, such as, e.g., phasor analysis or multi-exponential fitting.

The microscopy data are displayed in a histogram comprising a first axis representing the relative contributions. The term 'histogram' as used herein should be construed broadly as a diagram displaying the absolute or relative occurrence of events (e.g., photon counts) relative to the first axis. For example, histograms are commonly displayed as column diagrams, wherein each column represents the occurrence of events in a certain bin. However, other analogous representations are possible within the scope of the invention, e.g., a continuous line plot representing a fitting function of the absolute or relative occurrence values.

The first axis displaying the relative contributions may be scaled, e.g., by per cent or numbers between 0 and 1, as discussed above. However, other units representing the relative contribution to a channel are also possible. For instance, for lifetime data, the relative contribution to a channel may be expressed in the unit time (expressing an apparent lifetime or average lifetime of the data). Furthermore, in case of most lifetime data sets, the phase angle of the data points in a phasor plot also indicates the relative contribution to a channel in many cases and can thus be used as the unit of the first axis, in case data from phasor analysis are available. Furthermore, in certain situations (e.g., the mSTED method described above), phasors are distributed on a straight line through the origin of the phasor plot. In this case, the phasor radius/amplitude indicates the relative contribution to a channel and can thus be used as the unit of the first axis.

Various implementations of the manipulation tool are envisioned within the scope of the present invention. Examples include movable grid points or sliders on a graphical user interface. Alternatively, the manipulation tool may also be implemented, e.g., as one or several entry fields, in which numbers indicating certain ranges of the microscopy data in the histogram may be entered.

In certain embodiments, the first axis comprises a linear scale.

In certain embodiments, the microscopy data have been obtained by or the method comprises generating, in a focal plane in or on the sample, a first light distribution comprising excitation light and a second light distribution comprising depletion or switching light, wherein the depletion or switching light is capable of transferring the emitters from an active state, in which the emitters emit light in response to the excitation light to an inactive state, in which the emitters do not emit light in response to the excitation light or emit less light in response to the excitation light, and wherein the second light distribution comprises at least one local intensity minimum adjacent to at least one intensity maximum. Examples of this embodiment include STED microscopy and RESOLFT microscopy. For example, the second light distribution may comprise a single local minimum, such as, e.g., for a donut-shaped or bottle-beam-shaped light distribution, or the second light distribution may comprise several local minima, such as e.g., in a standing wave pattern. The first light distribution particularly comprises a local maximum which is aligned with the local minimum of the second light distribution.

In certain embodiments, the microscopy data comprise, for each of a plurality of pixels, a respective series of emittance light intensities changing in response to a change of a first parameter. For example, the series of emittance light intensities may be a time series or a stack of images (particularly from the same focal plane and the same area of the sample) obtained at different light intensities (e.g., excitation light intensities and/or depletion/switching light intensities).

In certain embodiments, a plot of the series of emittance light intensities relative to the first parameter is displayed, wherein a selection tool (which is particularly comprised in the manipulation tool) configured to select at least one subset of the microscopy data according to a sub-range of the first parameter upon receiving user input is displayed, particularly wherein the relative contribution of the pixels to the channels is determined based on the at least one selected subset of the microscopy data. For example, in a time series displaying a fluorescence decay obtained by pulsed STED microscopy, a first sub-range of the time axis corresponding to the time of a STED pulse and a second sub-range corresponding to the time after the STED pulse may be defined. These sub-ranges may be separately evaluated, since the decay rate is significantly faster during the STED pulse than after the STED pulse.

In certain embodiments, a second parameter of the microscopy data is obtained from at least two selected subsets, wherein particularly the contribution of the pixels to the channels is determined based on the second parameter. In case of a time series, the second parameter may be, e.g., a decay rate or a lifetime.

In certain embodiments, for each of a plurality of the pixels, a ratio between the second parameters from at least two of the selected subsets is obtained, wherein particularly the contribution of the pixels to the channels is determined based on the second parameter or the ratio. E.g., a ratio between the decay rate of the subset measured during the STED pulse and the decay rate of the subset measured after the STED pulse may be obtained.

In certain embodiments, the first parameter is a time. In other words, according to this embodiment, the microscopy data comprise a respective time trace of emittance light intensities for each pixel.

In certain embodiments, the different species of the emitters are characterized by different emittance lifetimes. Therein, the different species may have a different molecular structure, such as e.g., for different dye molecules. Alternatively, the different species may be identical molecules but may be exposed to different conditions in the sample, e.g., due to their subcellular location in a biological cell.

The term "lifetime" as used herein describes a characteristic time parameter describing a decay of light emission of an ensemble of emitters, or, in case of single emitters, a characteristic time after which a single emitter emits light with a certain probability.

In certain embodiments, the emitters belonging to the different species are located within different areas or volumes around the local minimum (or a respective local minimum in case of more than one minimum) of the second light distribution, such that the emitters of the different species have different distances from the local minimum, wherein particularly the depletion or switching light results in different emittance lifetimes of the emitters of the different species. In this situation, an improved spatial resolution may be obtained, e.g., by applying the STED-SPLIT algorithm (see reference cited above).

In certain embodiments, the series of emittance light intensities has been obtained (or is obtained) by illuminating the sample with the second light distribution at varying intensities of the depletion or switching light, wherein the first parameter is an intensity of the depletion or switching light. E.g., based on a phasor analysis of a stack of images obtained at varying light intensities of depletion or switching light, the resolution may be improved by the SPLIT algorithm as previously described for the mSTED method (see reference cited above).

In certain embodiments, the emitters of the different species comprise different emission spectra. Therein, in particular, determining the relative contribution to the channels is performed by a spectral unmixing algorithm.

In certain embodiments, the method further comprises illuminating the sample with a plurality of excitation pulses of the excitation light to excite the at least one emitter, detecting a plurality of photons emitted by the at least one emitter in response to the excitation pulses, and determining an arrival time relative to a preceding excitation pulse for each of the photons. In particular, the method further comprises determining the series of emittance light intensities from a histogram of the determined arrival times (which is different from the histogram of the microscopy data comprising a first axis representing the relative contributions to the channels). In particular, a time trace of photon counts is determined from the arrival times for each pixel. The displayed histogram comprising the first axis is particularly generated based on the time traces for each pixel, for example by generating a phasor plot from the time traces and performing linear unmixing in the phasor plot.

In certain embodiments, the method comprises illuminating the sample with time-modulated excitation light to generate a time-modulated emittance signal. The time-modulated emittance signal can be used, e.g., for lifetime analysis, particularly using phasor analysis.

In certain embodiments, the relative contribution of the pixels to the channels is determined by a phasor analysis of the microscopy data, or by means of a fitting function, particularly an exponential function or a sum of exponential functions, particularly of the series of emittance intensities.

In certain embodiments, the relative contribution of the pixels to the channels is determined by generating a phasor plot from the microscopy data, wherein a data point is displayed in the phasor plot for each pixel.

In certain embodiments, the data points are orthogonally projected onto a line connecting a first point on the phasor plot representing a first channel (of the above-described plurality of channels) and a second point on the phasor plot representing a second channel (of the above-described plurality of channels), wherein the relative contribution of a respective pixel to the first channel is determined from the distance of the respective projected data point from the first point divided by the distance between the first point and the second point, and/or the relative contribution of the respective pixel to the second channel is determined as the distance of the respective projected data point from the second point divided by the distance between the first point and the second point. This process may also be designated herein as 'linear unmixing'. The first point and the second point may be phasors representing the pure first and second emitter species. These may be determined experimentally, e.g., from samples containing only a single fluorophore, or may be derived from the phasor plot, e.g., by defining end points of the phasor distribution, particularly end points on a semicircle representing mono-exponential decays. Alternatively, arbitrary end points may be defined by the user.

In certain embodiments, the phasor plot is be displayed in addition to the histogram representing the relative contribution to the channels, particularly on the graphical user interface, wherein particularly a further manipulation tool is displayed, wherein an analysis of the phasor data is performed based on user inputs indicating a manipulation of the further manipulation tool. Alternatively, the phasor analysis may be performed automatically in the background without displaying the phasor plot. In particular, the further manipulation tool is configured to define and/or arrange a line in the phasor plot to determine the relative contribution to the first channel and/or the second channel (more particularly as described above).

When defining a line in the displayed phasor plot, either all phasors or a subset of phasors may be included in the phasor analysis. For example, to include all phasors in the orthogonal projection on the line, the phasors located further outside the line may be projected on an elongation of the line. Alternatively, only the phasors which can be orthogonally projected on the displayed line segment may be used in the analysis and other phasors may be discarded.

In certain embodiments, normalized barycentric coordinates are determined for each data point with respect to a first point on the phasor plot representing a first channel (of the above-described plurality of channels), a second point on the phasor plot representing a second channel (of the above-described plurality of channels), and a third point on the phasor plot representing a third channel (of the above-described plurality of channels), wherein the relative contribution of the pixels to the first channel, the second channel and the third channel is determined from the normalized barycentric coordinates.

In certain embodiments, a partial section of the first axis is selected in response to the user input indicating the manipulation of the manipulation tool, wherein the subset of the microscopy data selected by the manipulation tool comprises values of the relative contribution to at least one of the channels in a range defined by the partial section of the first axis.

The method further comprises determining weights, based on the relative contributions to the channels, wherein the intensities of the pixels of the at least one image are scaled by the weights, wherein particularly a second axis representing the weights is displayed, particularly on the graphical user interface.

In certain embodiments, at least one function defining the weights is adjusted by the user input indicating the manipulation of the manipulation tool, particularly wherein the at least one function comprises a first function which is monotonously increasing and a second function which is monotonously decreasing. In particular, the at least one function (particularly the first function and/or the second function) is a linear function, a section-wise linear function, a polynomial or a logistic function. In certain embodiments, a plot of the at least one function (particularly the first function and/or the second function) is displayed relative to the first axis and/or the second axis, particularly by the graphical user interface.

In certain embodiments, the manipulation of the manipulation tool comprises selecting and/or moving at least one grid point, wherein the at least one grid point is displayed relative to the at least one function. In particular, the at least one grid point defines the at least one function.

In certain embodiments, the relative contribution for each pixel to the channels is determined by an artificial intelligence module, wherein the artificial intelligence module has been trained based on a training data set comprising microscopy data and corresponding relative contributions to the channels. The artificial intelligence module operates based on an artificial intelligence algorithm involving, e.g., an artificial neural network, a support vector machine or similar means. In the training data set, the actual relative contributions of each pixel to the channels may be obtained by independent methods.

In certain embodiments, a subset of the microscopy data is selected from the histogram or the relative contribution to the channels is adjusted by an artificial intelligence module. In this manner, initial parameters may be provided which may be further modified by the user as needed.

In certain embodiments, the artificial intelligence module is further trained based on user inputs manipulating the manipulation tool and corresponding images.

A second aspect of the invention relates to a device for analyzing microscopy data, for executing the method according to the first aspect, as defined with appended independent claim 13, wherein the device comprises - *inter alia* and as further defined with claim 13 - a processor configured to receive microscopy data obtained from a sample comprising a plurality of emitters which emit emittance light in response to excitation light, wherein the microscopy data comprise emittance light intensities for a plurality of pixels, wherein the processor is further configured to determine a relative contribution to a plurality of channels (i.e., at least two channels) representing emittance light emitted by different species of the emitters for each of the pixels, a display device configured to display the microscopy data in at least one histogram comprising a first axis representing the relative contributions to the channels, wherein the display device is further configured to display a manipulation tool. The device further comprises an input device configured to receive a user input indicating a manipulation of the manipulation tool to select of a subset of the microscopy data from the histogram and/or to adjust the relative contribution to the channels, wherein the display device is configured to display at least one image based on the subset of the microscopy data that have been selected based on the histogram and/or the relative contributions to the channels that have been adjusted based on the histogram.

In particular, the processor is configured to adjust the relative contribution to the channels based on the user input received by the input device.

The histogram displays numbers of pixels assigned to a plurality of classes indicating respective ranges of the relative contribution to the plurality of channels. In particular, pixels which have the same relative contribution to a channel are counted and depicted in the histogram as a number of occurrences in certain ranges of the relative contribution.

The processor is configured to adjust the relative contribution to the channels by determining weights based on the relative contributions to the channels and scaling the intensities of the pixels by the weights.

In certain embodiments, the processor comprises an artificial intelligence module configured to determine the relative contribution for each pixel to the channels and/or select a subset of the microscopy data from the histogram and/or adjust the relative contribution to the channels, wherein the artificial intelligence module is configured to be trained or is trained based on a training data set comprising microscopy data and corresponding relative contributions to the channels, wherein particularly the artificial intelligence module is further configured to be trained or is trained based on user inputs manipulating the manipulation tool and corresponding images.

An aspect (which may be combined with any of the other aspects of the present invention as defined with the independent claims) relates to an artificial intelligence module configured to receive microscopy data obtained from a sample comprising a plurality of emitters which emit emittance light in response to excitation light, wherein the microscopy data comprise emittance light intensities for a plurality of pixels, and wherein the artificial intelligence module is configured to determine for each of the pixels a relative contribution to a plurality of channels representing emittance light emitted by different species of the emitters. In particular, the artificial intelligence module is configured to be trained or is trained based on a training data set comprising microscopy data and corresponding relative contributions to the channels and/or trained based on user inputs manipulating the manipulation tool and corresponding images.

In certain embodiments, the sample is stained with a plurality of fluorophores having distinct fluorescence lifetimes, particularly wherein the fluorophores comprise similar emission spectra and/or excitation spectra.

In certain embodiments, the microscopy data are obtained by fluorescence lifetime imaging (FLIM).

In certain embodiments, the artificial intelligence module is configured to implement an artificial intelligence algorithm, particularly involving an artificial neural network, a support vector machine or a cluster analysis algorithm.

In certain embodiments, the artificial intelligence module is configured to allocate the microscopy data into a plurality of clusters.

In certain embodiments, each of the clusters represents an emittance lifetime (e.g., associated with a certain emitter species).

In certain embodiments, the microscopy data comprises a time series displaying a fluorescence decay obtained by pulsed STED microscopy, wherein the artificial intelligence module is configured to analyze the microscopy data from a first sub-range of a time axis corresponding to the time of a STED pulse and/or a second sub-range of the time axis corresponding to the time after the STED pulse. In particular, the artificial intelligence module is configured to define the first sub-range and/or the second sub-range.

Based on the result generated by the artificial intelligence module, the channels may be displayed as separate images or overlaid in one image.

According to an embodiment of the invention as defined with appended dependent claim 14, there is provided a microscope comprising a device for analyzing microscopic data according to appended independent claim 13.

A further aspect of the invention relates to a computer program according to appended claim 15.

The invention is only limited by the scope of the appended claims.

Further embodiments of the invention may be derived from the claims, the description and the drawings, limited only by the scope of the appended claims.

Further embodiments may be drawn from features stated in the description or derivable from the drawings which may be singly or cumulatively applied, limited only be the scope of the appended claims.

The invention is further elucidated and described hereafter with reference to the exemplary embodiments displayed in the figures. These embodiments are non-restrictive examples which are not meant to limit the scope of the invention which is defined in the appended claims.

### Short description of the figures

- Fig. 1: is a schematic illustration of an embodiment of the method according to the present invention;
- Fig. 2: shows a phasor plot comprising data points relating to three channels of emitter species, which may be used in the determination of relative contributions by the method according to the present invention;
- Fig. 3: shows different histograms and corresponding manipulation data according to embodiments of the method according to the invention;
- Fig. 4: shows a microscope comprising a device for analyzing microscopy data according to the present invention.

### Description of the figures

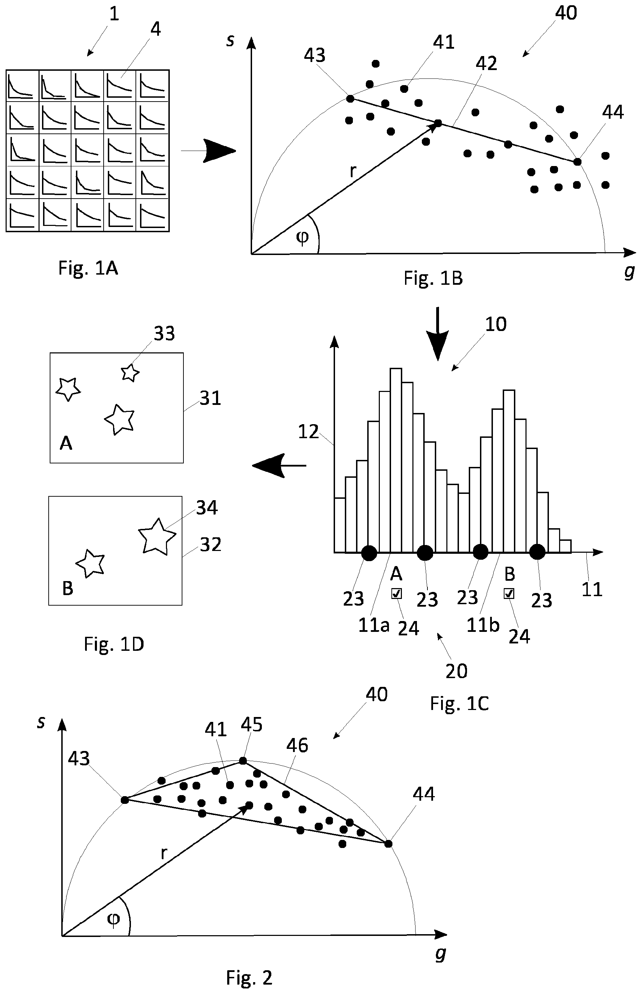

Fig. 1 is a schematic diagram showing four subsequent steps (Fig. 1A to Fig. 1D) of the method according to an embodiment of the present invention, specifically involving fluorescence lifetime analysis.

**Fig. 1A** illustrates microscopy data 1 comprising a plurality of pixels 4 (e.g., from a confocal scan of the sample 2) each containing a time trace of emittance light intensities relative to an initial excitation light pulse. Although only 25 pixels 4 are shown for simplicity, the actual number of pixels 4 may be much higher.

The time traces may be obtained, e.g., by recording arrival times of single photons emitted by emitters 3 in the sample 2 relative to a corresponding excitation light pulse. For detection, e.g., a confocal point detector, such as an avalanche photodiode or a photomultiplier, coupled to evaluation electronics (e.g., a time-correlated single photon counting module, TCSPC) may be used. The evaluation electronics typically generate a photon histogram indicating the frequency of occurrence of photon detection events versus time.

These time traces display a fluorescence decay curve, which when light from more than one emitter species contributes to the respective pixel, typically follows multiexponential decay kinetics.

In the next step of the example according to **Fig. 1****,** a phasor analysis is performed. In other words, Fourier coefficients are calculated from the time traces, resulting in a complex phasor having a real part g and an imaginary part s for each pixel 4. These phasors may be plotted in a phasor plot 40 as shown in **Fig. 1B****.** The phasor plot 40 comprises data points 41, wherein each data point 41 represents a pixel 4. Each data point 41 comprises a phase angle φ and a radius r. The fluorescence decay of the pure first species of emitters 3 (associated with the first channel A) is represented by a first point (or phasor) 43, and the decay of the pure second species associated with channel B is represented by a second point (or phasor) 44. These points 43, 44 are depicted on a semi-circle of radius 0,5 and an origin at the coordinates (0,5;0), meaning that the pure first and second species decay with mono exponential kinetics. Of course, certain fluorophores may also exhibit multiexponential decays, and the corresponding phasors would therefore be located inside of the semicircle.

In the data set shown in **Fig. 1B****,** the data points/phasors 41 scatter around a line 42 connecting the first point 43 and the second point 44, wherein data points 41 comprising light from both emitter species, and thus characterized by a mixture of the corresponding lifetimes, would be expected to be located on the line, wherein the relative contribution to each of the species, i.e., the first channel A and the second channel B can be determined from the distance of the respective data point 41 from the first point 43 and the second point 44. E.g., a pixel comprising 50% of signal from the first and second emitter species would result in a data point 41 located on the line 42 located half-way between the first point 43 and the second point 44. A pixel comprising 70% of signal from the first emitter species and 30% of signal from the second emitter species, would result in a data point 41 located at a distance from the first point 43 equal to 30% of the total distance between the first point 43 and the second point 44.

A possible linear unmixing procedure to determine the relative contributions to the first channel A and the second channel B includes projecting the data points 41 on the line 42, measuring the distance of the projection from the first point 43 and the second point 44, and determining the relative contribution to the channels A, B from the measured distance.

An allocation to a first channel A, a second channel B and a third channel C may be performed based on a phasor plot 40 as shown in **Fig. 2** by determining the barycentric coefficients of each data point/phasor 41 with respect to the first point 43, the second point 44 and a third point 45 forming a triangle in the phasor plot 40. Essentially, determining the barycentric coefficient for a given data point 41 with respect to channel A is equivalent to calculating the fraction between the area of the partial triangle formed by the data point 41, the second point 44 and the third point 45 and the total area of the triangle formed by the first point 43, the second point 44 and the third point 45. The other barycentric coefficients relative to the second channel B and the third channel C can be determined in a similar manner using the areas of the corresponding partial triangles.

**Fig. 1C** shows a histogram 10 of the microscopy data 1 plotted against a first axis 11 representing the relative contribution of the microscopy data 1 to the first channel A and the second channel B. In the depicted example, the histogram 10 was derived from the phasor plot 40 shown in Fig. 1B, and the first axis 11 represents the distances of the data points 41 from the first point 43 and the second point 44 on the line 42.

The histogram 10 is displayed on a graphical user interface together with a manipulation tool 20. According to the example illustrated in **Fig. 1C****,** the manipulation tool 20 comprises two partial segments 11a, 11b of the first axis 11, the length of which can be changed by a user input, particularly by means of dragging (e.g., by a computer-mouse drag-and-drop operation or by a swipe on a touchscreen) the grid points 23 along the first axis 11. The two partial segments 11a, 11b represent the data points 41 of the histogram 10 to be displayed for the first channel A and the second channel B, respectively. The first partial segment 11a and the second partial segment 11b may be selected and deselected using check boxes 24. For instance, if only the check box 24 below the first partial segment 11a is activated, only the selection of data points 41 allocated to the first channel A is used and an image is only generated from the selected data points 41.

**Fig. 1D** shows a first image 31 representing the first channel A and a second image 32 representing the second channel B, wherein the first image 31 and the second image 32 are generated from the data points 41 selected using the manipulation tool 20, using the stored scanning positions of the respective pixels 4.

As schematically indicated in **Fig. 1D****,** the selection results in separation of first structures 33 in the sample 2 labeled by the first species of emitters 3 (first image 31) and second structures 34 labeled by the second species of emitters 3 (second image 32). The first image 31 and the second image 32 may also be overlaid to form a combination image which simultaneously displays the information from the first channel A and the second channel B. To this end, e.g., the information from the two different channels may be color-coded.

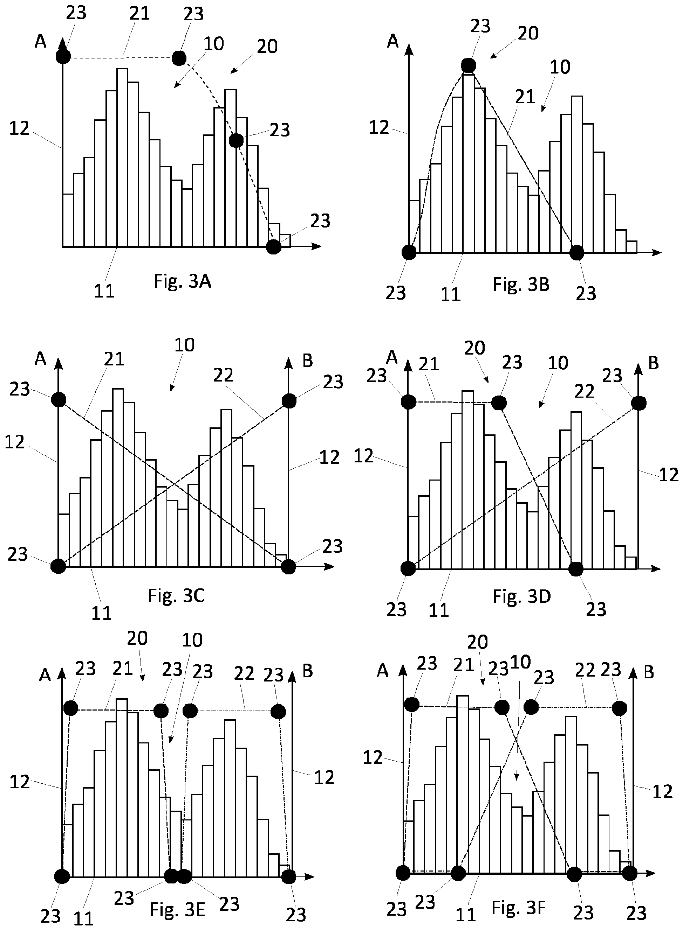

**Fig. 3** shows further embodiments of histograms 10 and selection tools 20 which can be used in the method according to the invention. **Fig. 3A** and **Fig. 3B** show manipulation tools 20 configured to select data points and adjust the weights determining the relative contribution only with respect to the first channel A. In contrast **Fig. 3C** **-** **Fig. 3F** display cases where selection and adjustment with respect to both the first channel A and the second channel B may be achieved by the manipulation tool 20. In general, in these cases, the selection and adjustment with respect to the first channel A and the second channel B may be performed independently, or, e.g., the adjustment/selection of points with respect to one of the channels may be performed according to a user input via the manipulation tool 20, whereas the selection/adjustment with respect to the remaining channel (or channels) is performed automatically based on the selection/adjustment with respect to the first channel A.

In all depicted histograms 10, a first function 21 and/or a second function 22 is plotted above the histogram 10, wherein the functions 21, 22 define weights which are used to determine the relative contribution of the data points to the first channel A and the second channel B, respectively. In the histograms 10 shown in **Fig. 3A** and **Fig. 3B****,** only the first function 21 is displayed. In all depicted examples, grid points 23 are provided along the plot of the first function 21 and/or the second function 22 as part of the manipulation tool 20, wherein the grid points 23 may be moved by a user input (e.g., by a drag-and drop operation or by a swipe on a touchscreen as described above).

The functions 21, 22 may be linear or stepwise linear functions as displayed in **Fig. 3A** and **Fig.3C-F** or non-linear functions as shown in **Fig. 3B****.**

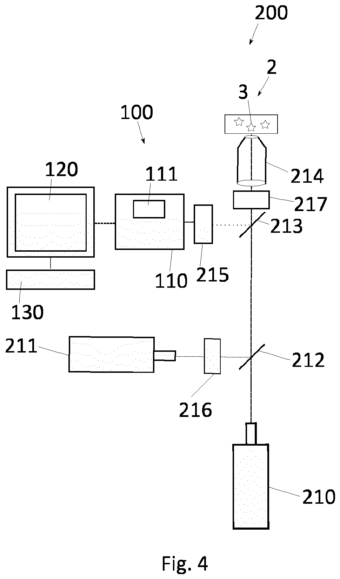

**Fig. 4** shows a microscope 200 comprising an embodiment of the device 100 for analyzing microscopy data 1 according to the invention.

The microscope 200 is a laser scanning microscope comprising a first light source 210 (e.g., an excitation laser) and an optional second light source 211. The beams from the first light source 210 and the second light source 211 are combined by a beam combiner 212.

The light from the first light source 210 and optionally the second light source 211 is focused into a sample 2 comprising emitters 3 which are excited by the light produced by the first light source 210, and emit, e.g., fluorescence light when excited.

The light beams generated by the first light source 210 and the second light source 211 may be scanned over/through the sample 2 by a scanning device 217, e.g., a galvanometric scanner.

A beam shaping device 216 (e.g., a phase plate or a spatial light modulator) may be used to generate a light distribution with a local minimum, e.g., a donut-shaped light distribution, from the light generated by the second light source 211 at the focus in the sample 2. To this end, additional polarizing elements may be provided in the beam path (not shown). If the second light source 211 generates depletion light or switching light (e.g., STED light), this setup may be used to achieve super-resolution.

Alternatively, e.g., the second light source 211 may provide excitation light of a different wavelength than the first light source 210, e.g., to simultaneously excite two different species of emitters 3 in the sample 2.

The light (e.g., fluorescence light) emitted by the emitters 3 in the sample 2 is picked up through the objective 214 and de-scanned by the scanning device 217. The emitted light is then separated from the excitation light (and optionally depletion or switching light) by a dichroic mirror 213 and picked up by a detector 215, e.g., a confocal point detector such as an avalanche photodiode or a photomultiplier.

The detector 215 is coupled to a processor 110 (provided as a single processing unit or several connected processing units), which is configured to determine a relative contribution to the channels A,B, particularly the first channel A representing emittance light emitted by a first species of the emitters 3 and/or the second channel B representing emittance light emitted by a second species of the emitters 3 for each of the pixels 4. To this end, the processor 110 is optionally configured to count single photons arriving at the detector 215, determine arrival times of individual photons relative to a corresponding excitation pulse, and/or evaluate lifetime data or STED microscopy data as described above. For instance, the processor 110 may be configured to perform phasor analysis of the microscopy data 1 received from the detector 215 and/or configured to generate a histogram 10 comprising the first axis 11 representing the relative contributions to the first channel A and/or the second channel B.

Furthermore, the device 100 comprises a display device 120 and an input device 130 which are both connected to the processor 110.

The display device 120 is configured to display the microscopy data 1 in the histogram 10 and display the manipulation tool 20. The input device 130 is configured to receive a user input indicating a manipulation of the manipulation tool 20 to select of a subset of the microscopy data 1 from the histogram 10 and/or to adjust the relative contribution to the channels A, B. The display device 120 is configured to display the images 31,32, particularly the first image 31 based on the selected subset of the microscopy data 1 and/or the adjusted relative contributions to the first channel A and/or a second image 32 based on the selected subset of the microscopy data 1 and/or the adjusted relative contributions to the second channel B.

Optionally, the processor 110 may comprise an artificial intelligence module 111 configured to determine the relative contribution for each pixel 4 to the channels A, B and/or select a subset of the microscopy data 1 from the histogram 10 or adjust the relative contribution to the channels A, B. The artificial intelligence module 111 may be trained based on a training data set comprising microscopy data 1 and corresponding relative contributions to the channels A, B, and particularly also based on user inputs manipulating the manipulation tool 20 and corresponding images 31,32.

### List of reference signs

- 1: Microscopy data
- 2: Sample
- 3: Emitter
- 4: Pixel
- 10: Histogram
- 11: First axis
- 11a,11b: Partial segments
- 12: Second axis
- 20: Manipulation tool
- 21: First function
- 22: Second function
- 23: Grid point
- 24: Check box
- 31: First image
- 32: Second image
- 33: First structure
- 34: Second structure
- 100: Device for analyzing microscopy data
- 110: Processor
- 111: Artificial intelligence module
- 120: Display device
- 130: Input device
- 200: Microscope
- 210: First light source
- 211: Second light source
- 212: Beam combiner
- 213: Beam splitter
- 214: Objective
- 215: Detector
- 216: Beam shaping device
- 217: Scanning device
- A: First channel
- B: Second channel
- C: Third channel

## Claims

1. A method for analyzing microscopy data (1), comprising the steps of
a. receiving, by a processor (110), microscopy data (1) obtained from a sample (2) comprising a plurality of emitters (3) which emit emittance light in response to excitation light, wherein the microscopy data (1) comprise emittance light intensities for a plurality of pixels (4),
b. determining, by the processor (110) for each of the pixels (4) a relative contribution to a plurality of channels (A, B, C) representing emittance light emitted by different species of the emitters (3),
c. displaying, by a display device (120), the microscopy data (1) in at least one histogram (10) comprising a first axis (11) representing the relative contributions to at least one of the channels (A, B, C), wherein the histogram (10) displays numbers of pixels (4) assigned to a plurality of classes indicating respective ranges of the relative contribution to the plurality of channels (A, B, C),
d. displaying, by the display device (120), a manipulation tool (20),
e. receiving, by an input device (130), a user input indicating a manipulation of the manipulation tool (20) to select a subset of the microscopy data (1) from the histogram (10) or to adjust the relative contribution to the channels (A, B, C) by determining weights based on the relative contributions to the channels (A, B, C), and scaling the intensities of the pixels (4) by the weights, and
f. displaying, by the display device (120) at least one image (31, 32) based on the selected subset of the microscopy data (1) and/or the adjusted relative contributions to the channels (A, B, C).

2. The method according to claim 1, wherein the microscopy data (1) have been obtained by generating, in a focal plane in or on the sample (2), a first light distribution comprising excitation light and a second light distribution comprising depletion or switching light, wherein the depletion or switching light is capable of transferring the emitters (3) from an active state, in which the emitters (3) emit light in response to the excitation light to an inactive state, in which the emitters (3) do not emit light in response to the excitation light, and wherein the second light distribution comprises at least one local intensity minimum adjacent to at least one intensity maximum.

3. The method according to claim 1 or 2, wherein the microscopy data (1) comprise, for each of a plurality of pixels (4), a respective series of emittance light intensities changing in response to a change of a first parameter, wherein particularly a plot of the series of emittance light intensities relative to the first parameter is displayed, wherein a selection tool configured to select at least one subset of the microscopy data (1) according to a sub-range of the first parameter upon user input is displayed, wherein the relative contribution of the pixels (4) to the channels (A, B, C) is determined based on the at least one selected subset of the microscopy data (1), wherein more particularly a second parameter is obtained from at least two selected subsets, wherein even more particularly for each of a plurality of the pixels (4), a ratio between the second parameters from at least two of the selected subsets is obtained, wherein the contribution of the pixels (4) to the channels (A,B,C) is determined based on the second parameter or the ratio.

4. The method according to claim 3, wherein said first parameter is a time, wherein particularly
a. the different species of the emitters (3) are **characterized by** different emittance lifetimes, or
b. when referring back to claim 2, the emitters (3) belonging to the different species are located within different areas or volumes around the local minimum of the second light distribution, wherein particularly the depletion or switching light results in different emittance lifetimes of the emitters (3) of the different species.

5. The method according to one of the preceding claims, wherein the method further comprises illuminating the sample with a plurality of excitation pulses of the excitation light to excite the at least one emitter, detecting a plurality of photons emitted by the at least one emitter in response to the excitation pulses, and determining an arrival time relative to a preceding excitation pulse for each of the photons, wherein particularly the method further comprises determining the series of emittance light intensities from a histogram of the determined arrival times.

6. The method according to claim 3 when referring back to claim 2, wherein the series of emittance light intensities has been obtained by illuminating the sample (2) with the second light distribution at varying intensities of the depletion or switching light, and wherein said first parameter is an intensity of the depletion or switching light.

7. The method according to claim 1 or 2, wherein the emitters of the different species comprise different emission spectra.

8. The method according to one of the preceding claims, wherein the relative contribution of the pixels (4) to the channels (A, B, C) is determined by a phasor analysis of the microscopy data (1), or by means of a fitting function, particularly an exponential function or a sum of exponential functions, particularly of the series of emittance intensities, wherein particularly the relative contribution of the pixels (4) to the channels (A, B, C) is determined by generating a phasor plot (40) from the microscopy data (1), wherein a data point (41) is displayed in the phasor plot (40) for each pixel (4), and wherein particularly
a. the data points (41) are orthogonally projected onto a line (42) connecting a first point (43) on the phasor plot (40) representing a first channel (A) and a second point (44) on the phasor plot (40) representing a second channel (B), wherein the relative contribution of a respective pixel (4) to the first channel (A) is determined from the distance of the respective projected data point (41) from the first point (43) divided by the distance between the first point (43) and the second point (44), and/or the relative contribution of the respective pixel (4) to the second channel (B) is determined as the distance of the respective projected data point (41) from the second point (44) divided by the distance between the first point (43) and the second point (44), or
b. normalized barycentric coordinates are determined for each data point (41) with respect to a first point (43) on the phasor plot (40) representing a first channel (A), a second point (44) on the phasor plot (40) representing a second channel (B), and a third point (45) on the phasor plot (40) representing a third channel (C), wherein the relative contribution of the pixels (4) to the first channel (A), the second channel (B) and the third channel (C) is determined from the normalized barycentric coordinates.

9. The method according to one of the preceding claims, wherein a partial section (11a) of the first axis (11) is selected in response to the user input indicating the manipulation of the manipulation tool (20), wherein the subset of the microscopy data (1) selected by the manipulation tool (20) comprises values of the relative contribution to at least one of the channels (A, B, C) in a range defined by the partial section (11a) of the first axis (11).

10. The method according to one of the preceding claims, wherein a second axis (12) representing the weights is displayed, wherein particularly at least one function (21, 22) defining the weights is adjusted by the user input indicating the manipulation of the manipulation tool (20), more particularly wherein a first function (21) is monotonously increasing and a second function (22) is monotonously decreasing, wherein even more particularly the at least one function (21, 22) is a linear function, a section-wise linear function, a polynomial or a logistic function, wherein most particularly a plot of the at least one function (21, 22) is displayed relative to the first axis (11) and/or the second axis (12).

11. The method according to one of the preceding claims, wherein the manipulation of the manipulation tool (20) comprises selecting and/or moving at least one grid point (23), particularly defining the at least one function (21, 22) wherein the at least one grid point (23) is displayed relative to the first axis (11) and/or the second axis (12).

12. The method according to one of the preceding claims, wherein the relative contribution for each pixel (4) to a plurality of channels (A, B, C) is determined and/or a subset of the microscopy data (1) is selected from the histogram (10) or the relative contribution to the channels (A, B, C) is adjusted by an artificial intelligence module (111), wherein the artificial intelligence module (111) has been trained based on a training data set comprising microscopy data (1) and corresponding relative contributions to the channels (A, B, C), wherein particularly the artificial intelligence module (111) is further trained based on user inputs manipulating the manipulation tool (20) and corresponding images (31, 32).

13. A device (100) for analyzing microscopy data (1) according the method of claim 1, wherein the device (100) comprises
a. a processor (110) configured to receive microscopy data (1) obtained from a sample (2) comprising a plurality of emitters (3) which emit emittance light in response to excitation light, wherein the microscopy data (1) comprise emittance light intensities for a plurality of pixels (4), wherein the processor (110) is further configured to determine a relative contribution to a plurality of channels (A, B, C) representing emittance light emitted by a different species of the emitters (3) for each of the pixels (4),
b. a display device (120) configured to display the microscopy data (1) in at least one histogram (10) comprising a first axis (11) representing the relative contributions to the channels (A , B, C), wherein the histogram (10) displays numbers of pixels (4) assigned to a plurality of classes indicating respective ranges of the relative contribution to the plurality of channels (A, B, C), and wherein the display device (120) is further configured to display a manipulation tool (20),
c. an input device (130) configured to receive a user input indicating a manipulation of the manipulation tool (20) to select of a subset of the microscopy data (1) from the histogram (10) and/or to adjust the relative contribution to the channels (A, B, C) by determining weights based on the relative contributions to the channels (A, B, C), and scaling the intensities of the pixels (4) by the weights,
d. wherein the display device (120) is configured to display at least one image (31, 32) based on the selected subset of the microscopy data (1) and/or the adjusted relative contributions to the channels (A, B, C).

14. A microscope (200) comprising a device (100) for analyzing microscopic data (100) according to claim 13.

15. A computer program comprising instructions configured to cause the microscope (200) according to claim 14 to execute the method according to one of the claims 1 to 12.

## Patentansprüche

1. Verfahren zur Analyse von Mikroskopiedaten (1), umfassend die folgenden Schritte:
a. Empfangen, durch einen Prozessor (110), von Mikroskopiedaten (1), die von einer Probe (2) erhalten wurden, die eine Mehrzahl von Emittern (3) umfasst, die Emissionslicht als Reaktion auf Anregungslicht emittieren, wobei die Mikroskopiedaten (1) Emissionslichtintensitäten für eine Mehrzahl von Pixeln (4) umfassen,
b. Bestimmen, durch den Prozessor (110) für jedes der Pixel (4), eines relativen Beitrags zu einer Mehrzahl von Kanälen (A, B, C), die Emissionslicht repräsentieren, das von verschiedenen Arten der Emitter (3) emittiert wird,
c. Anzeigen der Mikroskopiedaten (1) durch eine Anzeigevorrichtung (120) in mindestens einem Histogramm (10), das eine erste Achse (11) umfasst, welche die relativen Beiträge zu mindestens einem der Kanäle (A, B, C) repräsentiert, wobei das Histogramm (10) Anzahlen von Pixeln (4) anzeigt, die einer Mehrzahl von Klassen zugeordnet sind, die jeweilige Bereiche des relativen Beitrags zu der Mehrzahl von Kanälen (A, B, C) anzeigen,
d. Anzeigen eines Manipulationswerkzeugs (20) durch die Anzeigevorrichtung (120),
e. Empfangen einer Benutzereingabe durch eine Eingabevorrichtung (130), die eine Manipulation des Manipulationswerkzeugs (20) anzeigt, um eine Teilmenge der Mikroskopiedaten (1) aus dem Histogramm (10) auszuwählen oder den relativen Beitrag zu den Kanälen (A, B, C) anzupassen, indem Gewichte basierend auf den relativen Beiträgen zu den Kanälen (A, B, C) bestimmt werden, und die Intensitäten der Pixel (4) durch die Gewichte skaliert werden, und
f. Anzeigen mindestens eines Bildes (31, 32) durch die Anzeigevorrichtung (120) basierend auf der ausgewählten Teilmenge der Mikroskopiedaten (1) und/oder der angepassten relativen Beiträge zu den Kanälen (A, B, C).

2. Verfahren nach Anspruch 1, wobei die Mikroskopiedaten (1) erhalten wurden, indem in einer Fokusebene in oder auf der Probe (2) eine erste Anregungslicht umfassende Lichtverteilung und eine zweite Depletions- oder Schaltlicht umfassende Lichtverteilung erzeugt wurde, wobei das Depletions- oder Schaltlicht in der Lage ist, die Emitter (3) von einem aktiven Zustand, in dem die Emitter (3) als Reaktion auf das Anregungslicht Licht emittieren, in einen inaktiven Zustand zu überführen, in dem die Emitter (3) als Reaktion auf das Anregungslicht kein Licht emittieren, und wobei die zweite Lichtverteilung mindestens ein lokales Intensitätsminimum umfasst, das an mindestens ein Intensitätsmaximum angrenzt.

3. Verfahren nach Anspruch 1 oder 2, wobei die Mikroskopiedaten (1) für jedes einer Mehrzahl von Pixeln (4) eine jeweilige Folge von Emissionslichtintensitäten umfassen, die sich als Reaktion auf eine Änderung eines ersten Parameters ändern, wobei insbesondere ein Plot der Folge von Emissionslichtintensitäten relativ zu dem ersten Parameter angezeigt wird, wobei ein Auswahlwerkzeug angezeigt wird, das dazu ausgebildet ist, mindestens eine Teilmenge der Mikroskopiedaten (1) gemäß einem Teilbereich des ersten Parameters auf Benutzereingabe auszuwählen, wobei der relative Beitrag der Pixel (4) zu den Kanälen (A, B, C) basierend auf der mindestens einen ausgewählten Teilmenge der Mikroskopiedaten (1) bestimmt wird, wobei weiter insbesondere ein zweiter Parameter aus mindestens zwei ausgewählten Teilmengen ermittelt wird, wobei noch weiter insbesondere für jedes einer Mehrzahl der Pixel (4) ein Verhältnis zwischen den zweiten Parametern aus mindestens zwei der ausgewählten Teilmengen ermittelt wird, wobei der Beitrag der Pixel (4) zu den Kanälen (A, B, C) basierend auf dem zweiten Parameter oder dem Verhältnis bestimmt wird.

4. Verfahren nach Anspruch 3, wobei der erste Parameter eine Zeit ist, wobei insbesondere
a. die verschiedenen Arten der Emitter (3) durch unterschiedliche Emissionslebensdauern gekennzeichnet sind, oder
b. soweit rückbezogen auf Anspruch 2, die zu den verschiedenen Arten gehörenden Emitter (3) in unterschiedlichen Bereichen oder Volumina um das lokale Minimum der zweiten Lichtverteilung angeordnet sind, wobei insbesondere das Depletions- oder Schaltlicht zu unterschiedlichen Emissionslebensdauern der Emitter (3) der verschiedenen Arten führt.

5. Verfahren nach einem der vorhergehenden Ansprüche, wobei das Verfahren weiterhin das Beleuchten der Probe mit einer Mehrzahl von Anregungspulsen des Anregungslichts, um den mindestens einen Emitter anzuregen, das Erfassen einer Mehrzahl von Photonen, die von dem mindestens einen Emitter als Reaktion auf die Anregungsimpulse emittiert werden, und das Bestimmen einer Ankunftszeit relativ zu einem vorhergehenden Anregungspuls für jedes der Photonen umfasst, wobei insbesondere das Verfahren weiterhin das Bestimmen der Folge von Emissionslichtintensitäten aus einem Histogramm der bestimmten Ankunftszeiten umfasst.

6. Verfahren nach Anspruch 3, soweit rückbezogen auf Anspruch 2, wobei die Folge von Emissionslichtintensitäten durch Beleuchten der Probe (2) mit der zweiten Lichtverteilung bei variierenden Intensitäten des Depletions- oder Schaltlichts erhalten wurde, und wobei der erste Parameter eine Intensität des Depletions- oder Schaltlichts ist.

7. Verfahren nach Anspruch 1 oder 2, wobei die Emitter der verschiedenen Arten unterschiedliche Emissionsspektren aufweisen.

8. Verfahren nach einem der vorhergehenden Ansprüche, wobei der relative Beitrag der Pixel (4) zu den Kanälen (A, B, C) durch eine Phasoranalyse der Mikroskopiedaten (1) oder mittels einer Fitfunktion, insbesondere einer Exponentialfunktion oder einer Summe von Exponentialfunktionen, insbesondere der Folge von Emissionsintensitäten, bestimmt wird, wobei insbesondere der relative Beitrag der Pixel (4) zu den Kanälen (A, B, C) durch Erzeugen eines Phasorplots (40) aus den Mikroskopiedaten (1) bestimmt wird, wobei in dem Phasorplot (40) für jedes Pixel (4) ein Datenpunkt (41) dargestellt wird, und wobei insbesondere
a. die Datenpunkte (41) orthogonal auf eine Linie (42) projiziert werden, die einen ersten Punkt (43) auf dem Phasorplot (40), der einen ersten Kanal (A) darstellt, und einen zweiten Punkt (44) auf dem Phasorplot (40), der einen zweiten Kanal (B) darstellt, verbindet, wobei der relative Beitrag eines jeweiligen Pixels (4) zu dem ersten Kanal (A) aus dem Abstand des jeweiligen projizierten Datenpunktes (41) von dem ersten Punkt (43) geteilt durch den Abstand zwischen dem ersten Punkt (43) und dem zweiten Punkt (44) bestimmt wird, und/oder der relative Beitrag des jeweiligen Pixels (4) zu dem zweiten Kanal (B) aus dem Abstand des jeweiligen projizierten Datenpunktes (41) von dem zweiten Punkt (44) geteilt durch den Abstand zwischen dem ersten Punkt (43) und dem zweiten Punkt (44) ermittelt wird, oder
b. normalisierte baryzentrische Koordinaten für jeden Datenpunkt (41) in Bezug auf einen ersten Punkt (43) auf dem Phasorplot (40), der einen ersten Kanal (A) darstellt, einen zweiten Punkt (44) auf dem Phasorplot (40), der einen zweiten Kanal (B) darstellt, und einem dritten Punkt (45) auf dem Phasorplot (40), der einen dritten Kanal (C) darstellt, bestimmt werden, wobei der relative Beitrag der Pixel (4) zu dem ersten Kanal (A), dem zweiten Kanal (B) und dem dritten Kanal (C) aus den normierten baryzentrischen Koordinaten bestimmt wird.

9. Verfahren nach einem der vorhergehenden Ansprüche, wobei als Reaktion auf die die Manipulation des Manipulationswerkzeugs (20) anzeigende Benutzereingabe ein Teilabschnitt (11a) der ersten Achse (11) ausgewählt wird, wobei die durch das Manipulationswerkzeug (20) ausgewählte Teilmenge der Mikroskopiedaten (1) Werte des relativen Beitrags zu mindestens einem der Kanäle (A, B, C) in einem durch den Teilabschnitt (11a) der ersten Achse (11) definierten Bereich umfasst.

10. Verfahren nach einem der vorhergehenden Ansprüche, wobei eine die Gewichte darstellende zweite Achse (12) angezeigt wird, wobei insbesondere mindestens eine die Gewichte definierende Funktion (21, 22) durch die die Manipulation des Manipulationswerkzeugs (20) anzeigende Benutzereingabe angepasst wird, insbesondere wobei eine erste Funktion (21) monoton steigend und eine zweite Funktion (22) monoton fallend ist, wobei noch mehr insbesondere die mindestens eine Funktion (21, 22) eine lineare Funktion, eine abschnittsweise lineare Funktion, ein Polynom oder eine logistische Funktion ist, wobei insbesondere ein Plot der mindestens einen Funktion (21, 22) relativ zu der ersten Achse (11) und/oder der zweiten Achse (12) dargestellt wird.

11. Verfahren nach einem der vorhergehenden Ansprüche, wobei die Manipulation des Manipulationswerkzeugs (20) das Auswählen und/oder Bewegen mindestens eines Rasterpunktes (23) umfasst, der insbesondere die mindestens eine Funktion (21, 22) definiert, wobei der mindestens eine Rasterpunkt (23) relativ zu der ersten Achse (11) und/oder zu der zweiten Achse (12) dargestellt wird.

12. Verfahren nach einem der vorhergehenden Ansprüche, wobei der relative Beitrag für jedes Pixel (4) zu mehreren Kanälen (A, B, C) bestimmt wird und/oder eine Teilmenge der Mikroskopiedaten (1) aus dem Histogramm (10) ausgewählt wird oder der relative Beitrag zu den Kanälen (A, B, C) durch ein Modul (111) für künstliche Intelligenz angepasst wird, wobei das Modul für künstliche Intelligenz (111) basierend Trainingsdatensatzes trainiert wurde, der Mikroskopiedaten (1) und entsprechende relative Beiträge zu den Kanälen (A, B, C) umfasst, wobei insbesondere das Modul für künstliche Intelligenz (111) basierend auf Benutzereingaben, die das Manipulationswerkzeug (20) manipulieren, und entsprechender Bilder (31, 32) weiter trainiert wird.

13. Vorrichtung (100) zur Analyse von Mikroskopiedaten (1) gemäß dem Verfahren nach Anspruch 1, wobei die Vorrichtung (100) umfasst
a. einen Prozessor (110), der dazu ausgebildet ist, Mikroskopiedaten (1) zu empfangen, die von einer Probe (2) erhalten wurden, die eine Mehrzahl von Emittern (3) umfasst, die als Reaktion auf Anregungslicht Emissionslicht emittieren, wobei die Mikroskopiedaten (1) Emissionslichtintensitäten für eine Mehrzahl von Pixeln (4) umfassen, wobei der Prozessor (110) weiterhin dazu ausgebildet ist, einen relativen Beitrag zu einer Mehrzahl von Kanälen (A, B, C) zu bestimmen, die Emissionslicht repräsentieren, das von einer unterschiedlichen Art der Emitter (3) für jedes der Pixel (4) emittiert wird,
b. eine Anzeigevorrichtung (120), die dazu ausgebildet ist, die Mikroskopiedaten (1) in mindestens einem Histogramm (10) anzuzeigen, das eine erste Achse (11) umfasst, die die relativen Beiträge zu den Kanälen (A, B, C) repräsentiert, wobei das Histogramm (10) Anzahlen von Pixeln (4) anzeigt, die einer Mehrzahl von Klassen zugeordnet sind, die jeweilige Bereiche des relativen Beitrags zu der Mehrzahl von Kanälen (A, B, C) anzeigen, und wobei die Anzeigevorrichtung (120) weiterhin dazu ausgebildet ist, ein Manipulationswerkzeug (20) anzuzeigen,
c. eine Eingabevorrichtung (130), die dazu ausgebildet ist, eine Benutzereingabe zu empfangen, die eine Manipulation des Manipulationswerkzeugs (20) anzeigt, um eine Teilmenge der Mikroskopiedaten (1) aus dem Histogramm (10) auszuwählen und/oder den relativen Beitrag zu den Kanälen (A, B, C) anzupassen, indem Gewichte basierend auf den relativen Beiträgen zu den Kanälen (A, B, C) bestimmt werden, und die Intensitäten der Pixel (4) durch die Gewichte skaliert werden,
d. wobei die Anzeigevorrichtung (120) dazu ausgebildet ist, mindestens ein Bild (31, 32) basierend auf der ausgewählten Teilmenge der Mikroskopiedaten (1) und/oder den angepassten relativen Beiträgen zu den Kanälen (A, B, C) anzuzeigen.

14. Mikroskop (200) mit einer Vorrichtung (100) zur Analyse von Mikroskopiedaten (100) nach Anspruch 13.

15. Computerprogramm mit Befehlen, die dazu ausgebildet sind, das Mikroskop (200) nach Anspruch 14 zu veranlassen, das Verfahren nach einem der Ansprüche 1 bis 12 auszuführen.

## Revendications

1. Procédé d'analyse des données de microscopie (1), comprenant les étapes suivantes
a. recevoir, par un processeur (110), de données de microscopie (1) obtenues à partir d'un échantillon (2) comprenant une pluralité d'émetteurs (3) qui émettent une lumière d'émittance en réponse à une lumière d'excitation, les données de microscopie (1) comprenant des intensités de lumière d'émittance pour une pluralité de pixels (4),
b. déterminer, par le processeur (110), pour chacun des pixels (4), une contribution relative à une pluralité de canaux (A, B, C) représentant la lumière d'émittance par différentes espèces d'émetteurs (3),
c. affichage, par un dispositif d'affichage (120), des données de microscopie (1) dans au moins un histogramme (10) comprenant un premier axe (11) représentant les contributions relatives à au moins un des canaux (A, B, C), l'histogramme (10) affichant des nombres de pixels (4) attribués à une pluralité de classes indiquant des plages respectives de la contribution relative à la pluralité de canaux (A, B, C),
d. affichage, par le dispositif d'affichage (120), d'un outil de manipulation (20),
e. recevoir, par un dispositif d'entrée (130), une entrée utilisateur indiquant une manipulation de l'outil de manipulation (20) pour sélectionner un sous-ensemble des données de microscopie (1) à partir de l'histogramme (10) ou pour ajuster la contribution relative aux canaux (A, B, C) en déterminant des poids basés sur les contributions relatives aux canaux (A, B, C), et en mettant à l'échelle les intensités des pixels (4) en fonction des poids, et
f. affichage, par le dispositif d'affichage (120), d'au moins une image (31, 32) basée sur le sous-ensemble sélectionné des données de microscopie (1) et/ou les contributions relatives ajustées aux canaux (A, B, C).

2. Le procédé selon la revendication 1, dans lequel les données de microscopie (1) ont été obtenues en générant, dans un plan focal dans ou sur l'échantillon (2), une première distribution de lumière comprenant la lumière d'excitation et une deuxième distribution de lumière comprenant la lumière d'inhibition ou de commutation, dans lequel la lumière d'inhibition ou de commutation est capable de transférer les émetteurs (3) d'un état actif, dans lequel les émetteurs (3) émettent de la lumière en réponse à la lumière d'excitation à un état inactif dans lequel les émetteurs (3) n'émettent pas de lumière en réponse à la lumière d'excitation, et dans lequel la deuxième distribution lumineuse comprend au moins un minimum d'intensité local adjacent à au moins un maximum d'intensité.

3. Le procédé selon la revendication 1 ou 2, dans lequel les données de microscopie (1) comprennent, pour chacun d'une pluralité de pixels (4), une série respective d'intensités de lumière d'émission changeant en réponse à un changement d'un premier paramètre, dans lequel en particulier un tracé de la série d'intensités de lumière d'émittance par rapport au premier paramètre est affiché, dans lequel un outil de sélection configuré pour sélectionner au moins un sous-ensemble des données de microscopie (1) en fonction d'une sous-gamme du premier paramètre sur entrée de l'utilisateur est affiché, dans lequel la contribution relative des pixels (4) aux canaux (A, B, C) est déterminée sur la base de'au moins un sous-ensemble sélectionné des données de microscopie (1), dans lequel plus particulièrement un second paramètre est obtenu à partir d'au moins deux sous-ensembles sélectionnés, dans lequel encore plus particulièrement pour chacun d'une pluralité de pixels (4), un rapport entre les seconds paramètres d'au moins deux des sous-ensembles sélectionnés est obtenu, dans lequel la contribution des pixels (4) aux canaux (A, B, C) est déterminée sur la base du second paramètre ou du rapport.

4. Le procédé selon la revendication 3, dans lequel ledit premier paramètre est un temps, dans lequel en particulier
a. les différentes espèces d'émetteurs (3) sont **caractérisées par** des durées de vie d'émission différentes, ou
b. selon la revendication 2, les émetteurs (3) appartenant aux différentes espèces sont situés dans des zones ou des volumes différents autour du minimum local de la seconde distribution de lumière, en particulier où la lumière d'inhibition ou de commutation entraîne des durées de vie d'émission différentes pour les émetteurs (3) des différentes espèces.

5. Le procédé selon l'une des revendications précédentes, dans lequel le procédé comprend en outre l'illumination de l'échantillon avec une pluralité d'impulsions d'excitation de la lumière d'excitation pour exciter l'au moins un émetteur, la détection d'une pluralité de photons émis par l'au moins un émetteur en réponse aux impulsions d'excitation, et la détermination d'un temps d'arrivée par rapport à une impulsion d'excitation précédente pour chacun des photons, dans lequel en particulier le procédé comprend en outre la détermination de la série d'intensités de lumière d'émittance à partir d'un histogramme des temps d'arrivée déterminés.

6. Le procédé selon la revendication 3, en référence à la revendication 2, dans lequel la série d'intensités de lumière d'émittance a été obtenue en illuminant l'échantillon (2) avec la seconde distribution lumineuse à des intensités variables de la lumière d'inhibition ou de commutation, et dans lequel le premier paramètre est une intensité de la lumière d'inhibition ou de commutation.

7. Le procédé selon la revendication 1 ou 2, dans lequel les émetteurs des différentes espèces ont des spectres d'émission différents.

8. Le procédé selon l'une des revendications précédentes, dans lequel la contribution relative des pixels (4) aux canaux (A, B, C) est déterminée par une analyse phasique des données de microscopie (1), ou au moyen d'une fonction d'ajustement, en particulier une fonction exponentielle ou une somme de fonctions exponentielles, en particulier de la série d'intensités d'émittance, où en particulier la contribution relative des pixels (4) aux canaux (A, B, C) est déterminée en générant un diagramme de phase (40) à partir des données de microscopie (1), où un point de données (41) est affiché dans le tracé de phase (40) pour chaque pixel (4), et où en particulier
a. les points de données (41) sont projetés orthogonalement sur une ligne (42) reliant un premier point (43) sur le diagramme de phase (40) représentant un premier canal (A) et un deuxième point (44) sur le diagramme de phase (40) représentant un deuxième canal (B), la contribution relative d'un pixel (4) respectif au premier canal (A) étant déterminée à partir de la distance entre le point de données projeté respectif (41) et le premier point (43) divisée par la distance entre le premier point (43) et le deuxième point (44), et/ou la contribution relative du pixel (4) au deuxième canal (B) est déterminée par la distance entre le point de données projeté respectif (41) et le deuxième point (44) divisée par la distance entre le premier point (43) et le deuxième point (44), ou
b. les coordonnées barycentriques normalisées sont déterminées pour chaque point de données (41) par rapport à un premier point (43) sur le diagramme de phase (40) représentant un premier canal (A), un deuxième point (44) sur le diagramme de phase (40) représentant un deuxième canal (B) et un troisième point (45) sur le diagramme de phase (40) représentant un troisième canal (C), la contribution relative des pixels (4) au premier canal (A), au deuxième canal (B) et au troisième canal (C) étant déterminée à partir des coordonnées barycentriques normalisées.

9. Le procédé selon l'une des revendications précédentes, dans lequel une section partielle (11a) du premier axe (11) est sélectionnée en réponse à l'entrée de l'utilisateur indiquant la manipulation de l'outil de manipulation (20), dans lequel le sous-ensemble des données de microscopie (1) sélectionnées par l'outil de manipulation (20) comprend des valeurs de la contribution relative à au moins un des canaux (A, B, C) dans une plage définie par la section partielle (11a) du premier axe (11).

10. Le procédé selon l'une des revendications précédentes, dans lequel un deuxième axe (12) représentant les poids est affiché, dans lequel en particulier au moins une fonction (21, 22) définissant les poids est ajustée par l'entrée de l'utilisateur indiquant la manipulation de l'outil de manipulation (20), plus particulièrement dans lequel une première fonction (21) est monotone croissante et une deuxième fonction (22) est monotone décroissante, dans lequel, plus particulièrement, au moins une fonction (21, 22) est une fonction linéaire, une fonction linéaire par section, une fonction polynomiale ou une fonction logistique, dans lequel, plus particulièrement, un tracé d'au moins une fonction (21, 22) est affiché par rapport au premier axe (11) et/ou au deuxième axe (12).

11. Le procédé selon l'une des revendications précédentes, dans lequel la manipulation de l'outil de manipulation (20) comprend la sélection et/ou le déplacement d'au moins un point de grille (23), en particulier définissant l'au moins une fonction (21, 22) dans lequel l'au moins un point de grille (23) est affiché par rapport au premier axe (11) et/ou au deuxième axe (12).

12. Le procédé selon l'une des revendications précédentes, dans lequel la contribution relative de chaque pixel (4) à une pluralité de canaux (A, B, C) est déterminée et/ou un sous-ensemble des données de microscopie (1) est sélectionné dans l'histogramme (10) ou la contribution relative aux canaux (A, B, C) est ajustée par un module d'intelligence artificielle (111), dans lequel le module d'intelligence artificielle (111) a été entraîné sur la base d'un ensemble de données d'entraînement comprenant des données de microscopie (1) et des contributions relatives aux canaux (A, B, C) correspondantes, dans lequel en particulier le module d'intelligence artificielle (111) est en outre entraîné sur la base des entrées de l'utilisateur manipulant l'outil de manipulation (20) et les images correspondantes (31, 32).

13. Dispositif (100) d'analyse des données de microscopie (1) selon le procédé de la revendication 1, dans lequel le dispositif (100) comprend
a. un processeur (110) configuré pour recevoir des données de microscopie (1) obtenues à partir d'un échantillon (2) comprenant une pluralité d'émetteurs (3) qui émettent une lumière d'émittance en réponse à une lumière d'excitation, dans lequel les données de microscopie (1) comprennent des intensités de lumière d'émittance pour une pluralité de pixels (4), dans lequel le processeur (110) est en outre configuré pour déterminer une contribution relative à une pluralité de canaux (A, B, C) représentant la lumière d'émittance émise par une espèce différente d'émetteurs (3) pour chacun des pixels (4),
b. un dispositif d'affichage (120) configuré pour afficher les données de microscopie (1) dans au moins un histogramme (10) comprenant un premier axe (11) représentant les contributions relatives aux canaux (A, B, C), dans lequel l'histogramme (10) affiche des nombres de pixels (4) attribués à une pluralité de classes indiquant des plages respectives de la contribution relative à la pluralité de canaux (A, B, C), et dans lequel le dispositif d'affichage (120) est en outre configuré pour afficher un outil de manipulation (20),
c. un dispositif d'entrée (130) configuré pour recevoir une entrée utilisateur indiquant une manipulation de l'outil de manipulation (20) pour sélectionner un sous-ensemble des données de microscopie (1) de l'histogramme (10) et/ou pour ajuster la contribution relative aux canaux (A, B, C) en déterminant des poids basés sur les contributions relatives aux canaux (A, B, C), et en mettant à l'échelle les intensités des pixels (4) en fonction des poids,
d. le dispositif d'affichage (120) est configuré pour afficher au moins une image (31, 32) sur la base du sous-ensemble sélectionné des données de microscopie (1) et/ou les contributions relatives aux canaux (A, B, C) ajustées.

14. Microscope (200) comprenant un dispositif (100) d'analyse des données de microscopie (100) selon la revendication 13.

15. Programme d'ordinateur comprenant des instructions configurées pour que le microscope (200) selon la revendication 14 exécute le procédé selon l'une des revendications 1 à 12.
